# EUROPEAN PATENT APPLICATION

(11) **EP 2 506 613 A2**
(43) Date of publication of application: **03.10.2012**
(21) Application number: 10833520.9
(22) Date of filing: 22.11.2010
(51) Int. Cl.: H04W 8/26

(54) **SYSTEM AND METHOD FOR MANAGING IPV6 ADDRESS AND ACCESS POLICY**

(30) Priority: 26.11.2009 KR 20090115013
(71) Applicant: Samsung SDS Co. Ltd., Seoul 135-918 (KR)
(72) Inventor: PARK, Seon Ok, Gwacheon-si Gyeonggi-do 427-739 (KR); AN, Se-Jun, Gwacheon-si Gyeonggi-do 427-705 (KR); JEONG, Seunghoon, Daegu 704-370 (KR)
(74) Representative: Grünecker, Kinkeldey, Stockmair & Schwanhäusser
(86) International application number: PCT/KR2010/008228
(87) International publication number: WO 2011/065708

(57) **Abstract**

The present invention relates to a system and method for managing an IPv6 address and access policy. According to the system and method for managing an IPv6 address and access policy of the present invention, IPv6 address and network access policies are set in a policy server on a per-user or user group basis, access policy information is generated for each user, and a user terminal receives access policy information corresponding to the user after the user terminal accesses the policy server and performs user authentication, whereupon the user terminal sets an IPv6 address and access policy function for the terminal in accordance with the access policy information.

## Description

### TECHNICAL FIELD

The present invention relates to a system and method for managing an Internet protocol version 6 (IPv6) address and access policy, and more particularly, to a system and method for a network administrator to remotely manage an IPv6 address and a network access policy to be assigned to a user using communication between a policy server and a terminal.

### BACKGROUND ART

Existing Internet protocol (IP) systems are based on Internet protocol version 4 (IPv4) technology having a 32-bit address system. However, with the increase in the use of the Internet and development of ubiquitous technology, addresses that can be assigned using the length of 32 bits are being exhausted. To solve this problem, Internet Engineering Task Force (IETF) has standardized IPv6 that utilizes a 128-bit address system.

However, an IPv6 address has a length of 128 bits, and thus is very long and complex compared to an IPv4 address. For this reason, it is very rare for a terminal (e.g., personal computer (PC)) user to manually set the IPv6 address of a terminal, and a method of automatically assigning an address using a dynamic host configuration protocol for IPv6 (DHCPv6), router advertisement (RA), etc. has been generalized. In other words, dynamic automatic address assignment schemes, such as DHCPv6 and RA, are currently used for IPv6 addresses in most network environments, and are automatically set through communication between protocols.

The above mentioned method is convenient for assigning all IPv6 addresses together. However, since it is almost impossible to perform access policy management such as assignment of a static address for a user or limitation of access, individual-specific control is practically impossible, and when absolutely necessary, a user should manually set and control a terminal. In particular, a network in which emphasis is put on security, such as an intranet of a corporation, may require a setting of firewall rules, a limitation on the access of a specific user, and so on. In this case, IPv6 addresses need to be fixed on a user basis.

However, using an existing dynamic automatic assignment scheme based on communication between equipment, individual IPv6 addresses cannot be controlled, and individual security rules cannot be applied to firewalls in Windows-based PCs because of changes in source IP addresses caused by request for comments (RFC) 4941. Also, in a Windows-based PC, an automatic tunneling function such as 6to4 is set as a default for an individual to use IPv6. Thus, it is difficult for a security manager to know that IPv6 communication between users is performed through encapsulated packets, and a serious problem may occur in the security management of a corporation.

Further, when an individual terminal should use a static IPv6 address, a user needs to manually set the address and also turn off a temporary address use function based on RFC 4941, resulting in considerable inconvenience. Moreover, a network administrator cannot assign or manage an IPv6 address based on an internal policy either, and even if a user manually sets an IPv6 address, the network administrator should check in person whether the IPv6 address is correctly set because it is impossible to verify remotely. Thus, there is still inconvenience.

### DISCLOSURE OF INVENTION

### TECHNICAL PROBLEM

The present invention is directed to a system and method for a network administrator to remotely manage an Internet protocol version 6 (IPv6) address and a network access policy to be assigned to a user using communication between a policy server and a terminal.

The present invention is also directed to a system and method in which an agent capable of communicating with a policy server is installed in an IPv6 terminal and enables access policy information on IPv6 address assignment, access-permitted workplaces, use of a private extension function, etc. to be downloaded from the policy server and the IPv6 terminal to be set, such that a network administrator can remotely manage an IPv6 address and an access policy.

The present invention is also directed to a system and method capable of readily performing network administration such as security by including information, such as a previously assigned IPv4 address, the subnet address of a workplace, a detailed access policy and a security level, in an IPv6 address of a terminal when the IPv6 address is set.

### TECHNICAL SOLUTION

One aspect of the present invention provides a system for managing an Internet protocol version 6 (IPv6) address and an access policy, including: a policy server configured to manage network access policy information set on a per-user or user group basis; and a user terminal having an agent module configured to access the policy server, authenticate a user, receive access policy information corresponding to the user, and automatically set an IPv6 address and an access policy function of the terminal on the basis of the access policy information.

Another aspect of the present invention provides a policy server for managing an IPv6 address and an access policy, including: an access policy setter configured to set IPv6 addresses and network access policies to be assigned on a per-user or user group basis and generate user-specific access policy information; a user authenticator configured to, when a user terminal accesses, request user information from the user terminal and authenticate a user; and an access policy storage configured to store the user-specific access policy information generated by the access policy setter.

Still another aspect of the present invention provides a method of managing an IPv6 address and an access policy, including: a) setting, at a policy server, IPv6 addresses and network access policies on a per-user or user group basis, and generating user-specific access policy information; b) accessing, at a user terminal, the policy server, authenticating a user, and receiving access policy information corresponding to the user; and c) setting, at the user terminal, an IPv6 address and an access policy function of the terminal on the basis of the access policy information.

### ADVANTAGEOUS EFFECTS

Exemplary embodiments of the present invention enable assignment of user-specific Internet protocol version 6 (IPv6) addresses, which is impossible in an existing automatic address assignment scheme, and allow a network administrator to remotely control and manage access policies. In other words, exemplary embodiments of the present invention solve a problem that it is impossible to know which site a specific user accesses because a terminal based on Windows, etc. automatically generates an IPv6 terminal and performs non-permitted communication with an external user, or the terminal utilizes a temporary address based on request for comments (RFC) 4941, thereby strengthening security management in a corporation.

In exemplary embodiments of the present invention, when user-specific IPv6 addresses need to be assigned according to policies, an agent module installed in a terminal automatically assigns an IPv6 address, unlike an existing scheme in which a user manually sets an IPv6 address. Thus, the user-specific IPv6 addresses can be readily assigned.

In exemplary embodiments of the present invention, a network administrator controls user-specific access policies through a policy server, and thereby can efficiently manage all user terminals together.

Exemplary embodiments of the present invention can use IPv4 for basic communication between a policy server and a terminal, thus efficiently operating in an environment in which IPv4 and IPv6 coexist as well as an environment in which only IPv6 is used.

### BRIEF DESCRIPTION OF THE DRAWINGS

FIG. 1 is a diagram showing a constitution of a system for managing an Internet protocol version 6 (IPv6) address and an access policy according to an exemplary embodiment of the present invention.
FIG. 2 is a block diagram showing a constitution of a policy server for managing an IPv6 address and an access policy according to an exemplary embodiment of the present invention.
FIG. 3 is a table showing examples of network access policies set by a network administrator.
FIG. 4 is a flowchart illustrating a method of managing an IPv6 address and an access policy according to an exemplary embodiment of the present invention.
FIG. 5 shows an example of a setting of an IPv6 address of a terminal based on user access policy information.

### MODE FOR THE INVENTION

Hereinafter, exemplary embodiments of the present invention will be described in detail. However, the present invention is not limited to the exemplary embodiments disclosed below, but can be implemented in various types. Therefore, the present exemplary embodiments are provided for complete disclosure of the present invention and to fully inform the scope of the present invention to those of ordinary skill in the art.

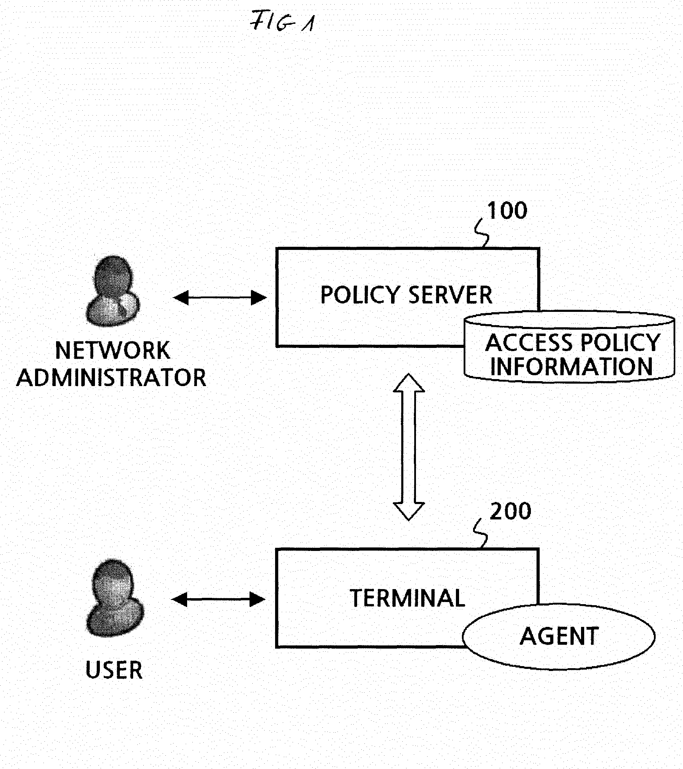

FIG. 1 is a diagram showing a constitution of a system for managing an Internet protocol version 6 (IPv6) address and an access policy according to an exemplary embodiment of the present invention.

Referring to FIG. 1, a system for managing an IPv6 address and an access policy according to an exemplary embodiment of the present invention includes a policy server 100 controlled by a network administrator, and at least one terminal 200 used for network access by an individual user. In the policy server 100, access policy information, which is set on a per-user or user group basis, is stored, and an agent module is included in the terminal 200 to receive access policy information from the policy server 100 and set an IPv6 address and an access policy function.

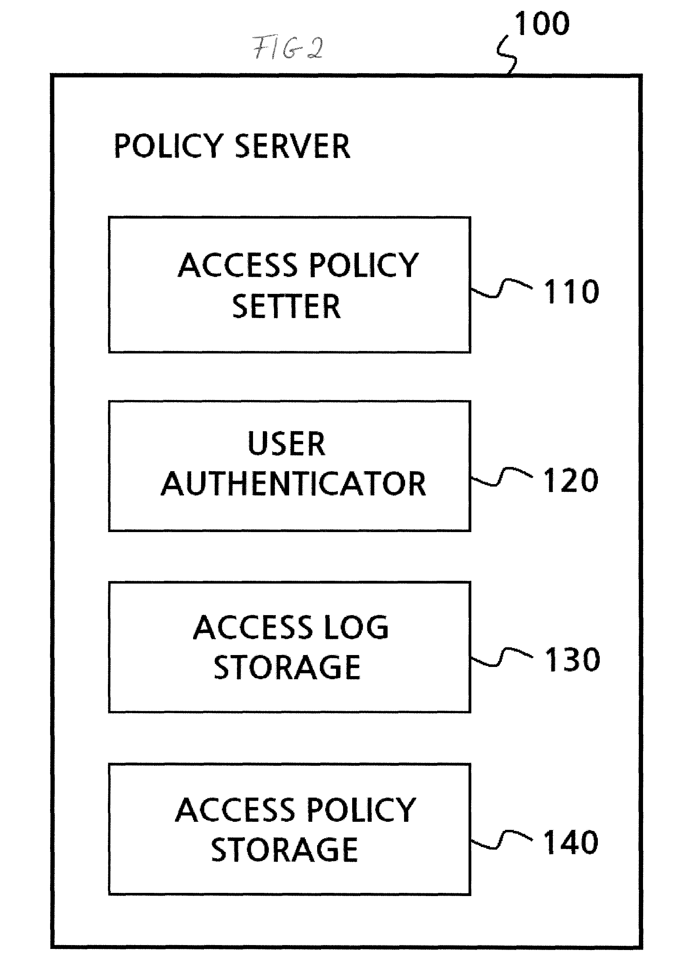

In this regard, FIG. 2 shows a detailed constitution of the policy server 100 according to an exemplary embodiment of the present invention by way of example. As shown in the drawing, the policy server 100 according to an exemplary embodiment of the present invention includes an access policy setter 110, a user authenticator 120, an access log storage 130, an access policy storage 140, and so on.

The access policy setter 110 functions to set IPv6 addresses and network access policies to be assigned on a per-user or user group basis. In other words, the network administrator sets (inputs) IPv6 addresses and network access policies, on a per-user or user group basis, through the access policy setter 110, thereby remotely managing an IPv6 address and an access policy for the user terminal 200.

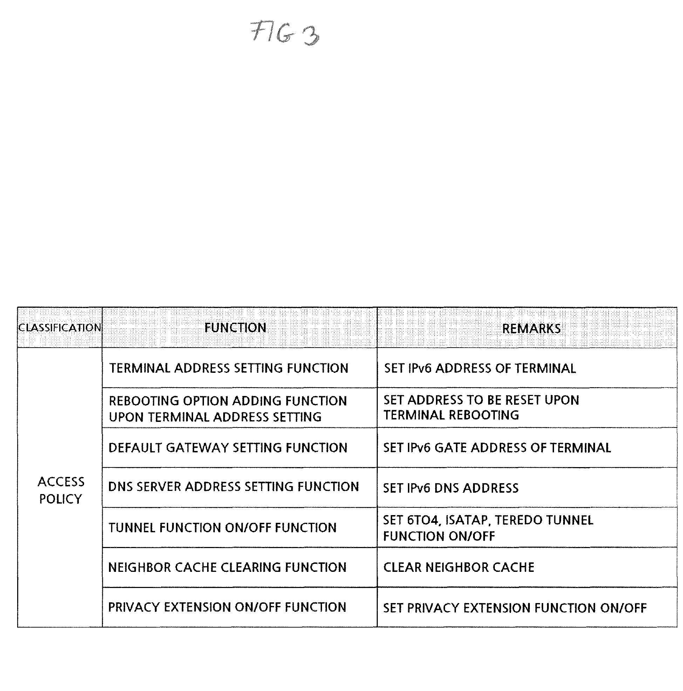

Examples of network access policies managed on a per-user or user group basis include, as shown in FIG. 3, a terminal address setting (static IP address or dynamic IP address assignment) function, a rebooting option adding function upon terminal address setting, a default gateway setting function, a domain name service (DNS) server address setting function, a tunnel function on/off function, a neighbor cache clearing function, a privacy extension on/off function, and so on. The access policy setter 110 matches detailed access policies set as mentioned above by the network administrator to users, thereby generating access policy information.

When the user terminal 200 requests user access policy information from the policy server 100, the user authenticator 120 requests user information on the terminal 200 and authenticates a user. User authentication may be performed using a user identification (ID), a password, personal data of the user, a media access control (MAC) address of the user terminal 200, etc., and may also be performed using biometric information such as a fingerprint when a higher security level is required.

When the user terminal 200 accesses the policy server 100, the access log storage 130 stores a user access record, such as an IP address, a MAC address, a user name, an access time and an access place of the terminal 200, in the form of a log.

The access policy storage 140 stores the user-specific access policy information set by the network administrator through the access policy setter 110 in the form of a database.

Thus far, the system for managing an IPv6 address and an access policy according to an exemplary embodiment of the present invention has been briefly described. Detailed operations, functions, etc. of the respective components will be described in detail below in conjunction with a method of managing an IPv6 address and an access policy according to an exemplary embodiment of the present invention.

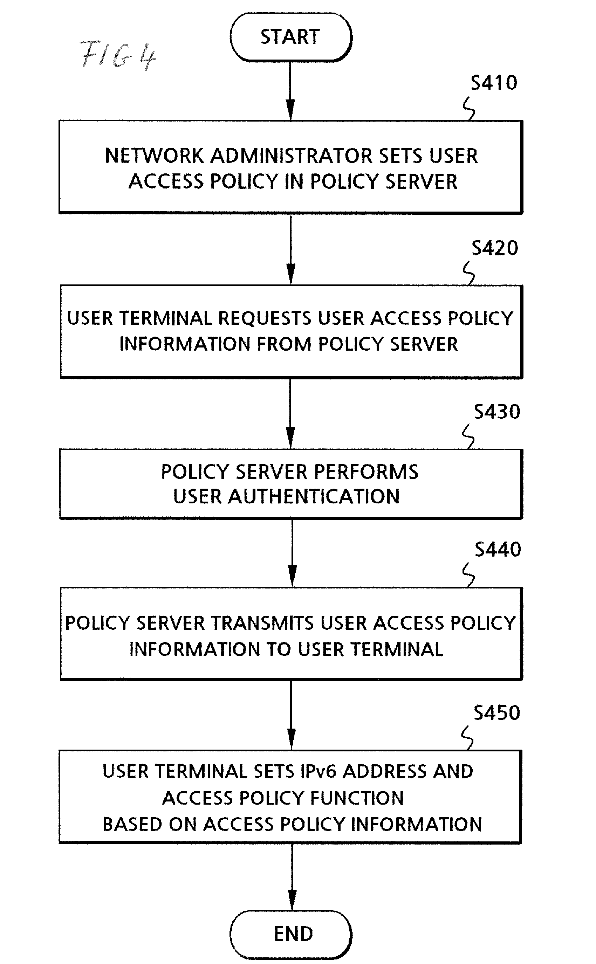

FIG. 4 is a flowchart illustrating a method of managing an IPv6 address and an access policy according to an exemplary embodiment of the present invention.

Referring to FIG. 4, in step 410, a network administrator performs network policy information setting, such as i) setting of subnet addresses according to respective workplaces of a company (i.e., setting of IPv6 address prefixes), ii) setting of user-specific security levels according to whether or not respective users are staff members, departments, ranks, etc., iii) IPv6 addresses (static IP addresses or dynamic IP addresses) of user terminals, default gateways, DNS server addresses, tunnel function on/off, neighbor cache clearing, privacy extension on/off, etc., through the access policy setter 110 of the policy server 100.

In step 420, the user terminal 200 (specifically, an agent module) accesses the policy server 100 and requests user access policy information, and in step 430, the user authenticator 120 of the policy server 100 requests user information from the user terminal 200 and performs authentication of a user. In this case, communication between the policy server 100 and the user terminal 200 is performed using IPv4. In other words, the policy server 100 and the user terminal 200 according to an exemplary embodiment of the present invention support an IPv4 and IPv6 dual stack, and may utilize an IPv4 or IPv6 link local address for communication between the policy server 100 and the user terminal 200 according to circumstances.

When the user authenticator 120 of the policy server 100 finishes the user authentication, in step 440, the user terminal 200 (specifically, the agent module) requests user access policy information from the policy server 100, and the policy server 100 transmits access policy information corresponding to the user authenticated in step 430 to the user terminal 200.

Then, in step 450, the user terminal 200 (specifically, the agent module) sets an IPv6 address and an access policy function of the terminal on the basis of the access policy information received from the policy server 100.

In addition, in an IPv4/IPv6 dual stack environment, the user terminal 200 (specifically, the agent module) is first assigned an IPv4 address, accesses the policy server 100 to perform user authentication and download user access policy information, and sets an IPv6 address and an access policy function of the terminal 200 on the basis of the downloaded user access policy information.

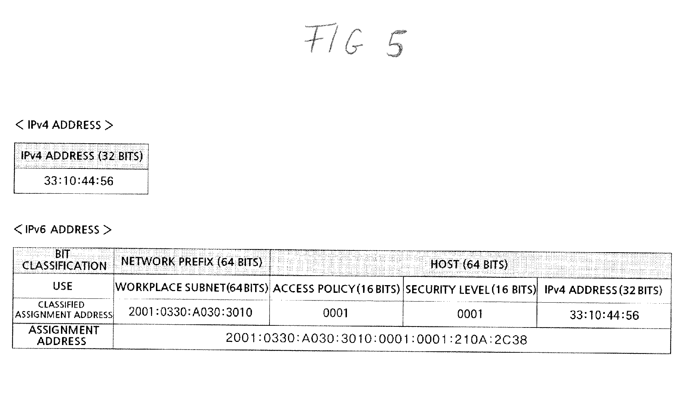

For reference, FIG. 5 shows an example of a setting of an IPv6 address of a terminal based on user access policy information according to an exemplary embodiment of the present invention. Specifically, FIG. 5 shows an example of a setting of an IPv6 address using a conventionally assigned IPv4 address (32 bits). Referring to FIG. 5, it is possible to set a 128-bit IPv6 address using, for example, a workplace subnet address (64 bits) as a prefix of the IPv6 address, and the conventionally assigned IPv4 address (32 bits), detailed access policies (16 bits) such as tunnel function on/off, and privacy extension on/off, and a security level (16 bits) relating to whether or not a user is a staff member, a department, a rank, etc. as a host of the IPv6 address.

Needless to say, the aforementioned FIG. 5 is an example. The IPv6 address of the terminal 200 may be generated regardless of the conventionally assigned IPv4 address, and a prefix and/or a host of the IPv6 address may be configured differently than shown in FIG. 5.

Meanwhile, as described above, the user terminal 200 causes an agent module to receive user access policy information from the policy server 100 and set an IPv6 address and an access policy function of the terminal 200 on the basis of the received access policy information in an exemplary embodiment of the present invention, such that the user terminal 200 can automatically set a complex IPv6 address, and a network administrator can remotely manage user-specific IPv6 addresses and network access policies using communication between the policy server 100 and the user terminal 200.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A system for managing an Internet protocol version 6 (IPv6) address and an access policy, comprising:
a policy server configured to manage network access policy information set on a per-user or user group basis; and
a user terminal having an agent module configured to access the policy server, authenticate a user, receive access policy information corresponding to the user, and automatically set an IPv6 address and an access policy function of the terminal on the basis of the access policy information.

2. The system of claim 1, wherein the IPv6 address of the user terminal is comprised of a 64-bit prefix portion corresponding to a subnet address of a workplace and a 64-bit host portion corresponding to a previously assigned IPv4 address and to the user access policy.

3. The system of claim 2, wherein the 64-bit host portion includes a security level of the user.

4. The system of any one of claims 1 to 3, wherein the access policy information includes information on at least one of a terminal address setting function, a rebooting option adding function upon terminal address setting, a default gateway setting function, a domain name service (DNS) server address setting function, a tunnel function on or off function, a neighbor cache clearing function, and a privacy extension on or off function.

5. The system of any one of claims 1 to 3, wherein the policy server and the user terminal support an IPv4 and IPv6 dual stack, and communicate for user authentication using IPv4 and IPv6 link local addresses.

6. A policy server for managing an Internet protocol version 6 (IPv6) address and an access policy, comprising:
an access policy setter configured to set IPv6 addresses and network access policies to be assigned on a per-user or user group basis and generate user-specific access policy information;
a user authenticator configured to, when a user terminal accesses the policy server, request user information from the user terminal and authenticate a user; and
an access policy storage configured to store the user-specific access policy information generated by the access policy setter.

7. The policy server of claim 6, wherein, when access policy information is requested by the user terminal, the policy server transmits to the user terminal access policy information corresponding to the user authenticated by the user authenticator.

8. The policy server of claim 6 or 7, wherein the access policy information includes information on at least one of a terminal address setting function, a rebooting option adding function upon terminal address setting, a default gateway setting function, a domain name service (DNS) server address setting function, a tunnel function on or off function, a neighbor cache clearing function, and a privacy extension on or off function.

9. The policy server of claim 6 or 7, wherein the policy server supports an IPv4 and IPv6 dual stack, and utilizes IPv4 and IPv6 link local addresses to communicate with the user terminal for user authentication.

10. The policy server of claim 6 or 7, wherein the IPv6 addresses include a 64-bit prefix portion corresponding to a subnet address of a workplace and a 64-bit host portion including a previously assigned IPv4 address, the user access policies and a security level.

11. The policy server of claim 6 or 7, further comprising an access log storage configured to store an IP address, a media access control (MAC) address, a user name and an access time of the user terminal when the user terminal accesses the policy server.

12. A method of managing an Internet protocol version 6 (IPv6) address and an access policy, comprising:
a) setting, at a policy server, IPv6 addresses and network access policies on a per-user or user group basis, and generating user-specific access policy information;
b) accessing, at a user terminal, the policy server, authenticating a user, and receiving access policy information corresponding to the user; and
c) setting, at the user terminal, an IPv6 address and an access policy function of the terminal on the basis of the access policy information.

13. The method of claim 12, wherein, in step b), the user terminal receives the access policy information using an IPv4 address.

14. The method of claim 12 or 13, wherein the access policy information includes information on at least one of a terminal address setting function, a rebooting option adding function upon terminal address setting, a default gateway setting function, a domain name service (DNS) server address setting function, a tunnel function on or off function, a neighbor cache clearing function, and a privacy extension on or off function.

15. The method of claim 12 or 13, wherein the IPv6 address of the terminal includes a 64-bit prefix portion corresponding to a subnet address of a workplace and a 64-bit host portion corresponding to a previously assigned IPv4 address, the user access policy and a security level.
